# EUROPEAN PATENT APPLICATION

(11) **EP 4 206 638 A1**
(43) Date of publication of application: **05.07.2023**
(21) Application number: 22216028.5
(22) Date of filing: 22.12.2022
(51) Int. Cl.: G01M 5/00, G01N 3/02, G01L 5/06, G01L 5/10, G01N 3/06, G01N 3/22

(54) **SYSTEM AND METHOD FOR TESTING CABLE BENDING FATIGUE**

(30) Priority: 29.12.2021 CN 202111636465
(71) Applicant: Aptiv Electric Systems Co., Ltd., Shanghai 200184 (CN)
(72) Inventor: ZHANG, Hao, Shanghai, 200184 (CN)
(74) Representative: Bardehle Pagenberg Partnerschaft mbB Patentanwälte Rechtsanwälte

(57) **Abstract**

A system for testing cable bending fatigue is provided. The testing system comprises a hollow body for at least one cable to pass through; a pair of primary gears, respectively located at both ends of the body, the pair of primary gears are connected by a transmission shaft and can be driven to rotate by a first motor via the transmission shaft; and at least one pair of secondary gears, each pair of the at least one pair of secondary gears is respectively meshed with one pair of primary gears, and can be driven to rotate by the meshed primary gears, wherein, both ends of the cable are respectively fixed to gear centers of a pair of secondary gears of the at least one pair of secondary gears, and wherein the body causes the cable in a bended state when both ends of the cable are fixed to the gear centers of the pair of secondary gears.

## Description

### TECHNICAL FIELD

The present disclosure relates to the technical field of automobiles, and more particularly, to a system and method for testing cable bending fatigue.

### BACKGROUND

With the continuous improvement of automobile automation, the use of in-vehicle sensors and controllers has also increased, resulting in a significant increase in the number of in-vehicle cables. In order to mount so many cables to the vehicle body, various connectors, plugs, fixtures or the like have been used. However, these cables be inevitably bent. Further, the degree of bending of these cables can even change due to factors such as body vibrations, mechanical movement of components during driving. Once the cable is damaged due to bending, it will affect the normal operation of the vehicle. Therefore, it is necessary to test the bending fatigue characteristics of cables.

A structure is known in which a test is performed by bending a cable in a manner of swing. Such approach has the problems of low operating frequency, poor structural stability and durability, and excessive noise during operation.

### SUMMARY

The present disclosure provides a system for testing cable bending fatigue, which has a high operating frequency, can test multiple samples at the same time, has less working noise, less vibration, and good structural stability.

According to one aspect of the present disclosure, a system for testing cable bending fatigue is provided, said system may comprise a hollow body, a pair of primary gears, and at least a pair of secondary gears. The hollow body may allow at least one cable to pass through. The pair of primary gears is respectively located at both ends of the body, said pair of primary gears are connected by a transmission shaft and can be driven to rotate by a first motor via the transmission shaft. Each pair of the at least one pair of secondary gears is respectively meshed with one pair of primary gears, and can be driven to rotate by the meshed primary gears. Both ends of the cable may be respectively fixed to gear centers of a pair of secondary gears of the at least one pair of secondary gears. The body may cause the cable in a bended state when both ends of the cable are fixed to the gear centers of the pair of secondary gears.

In an alternative embodiment, inner walls of the body may be a curved surface.

In an alternative embodiment, the body may have a constricted portion with a reduced diameter.

In an alternative embodiment, the body can be driven to rotate by a second motor.

In an alternative embodiment, the system may further comprise a motor control unit coupled to the first motor and the second motor and configured to cause the first motor and the second motor to drive the primary gears and the body in opposite directions, and wherein rotational speeds of the first motor and the second motor are controlled so that linear velocities of the body and the cable at their contact point are equal.

In an alternative embodiment, the system may further comprise a cable detection unit coupled to the cable and configured to energize the cable to detect whether the cable is damaged.

According to another aspect of the present disclosure, a method for testing cable bending fatigue is provide, said method may include passing at least one cable through a hollow part of the body of the testing system for cable bending fatigue of claim 1, with both ends of each cable fixed to gear centers of both gears of corresponding pair of secondary gears; and driving a pair of primary gears meshed with the pair of secondary gears by a first motor to rotate the cable on its own axis.

In an alternative embodiment, the method may further include driving the body by a second motor.

In an alternative embodiment, rotation speed and direction of the first motor and the second motor may be selected so that linear velocities of the body and the cable at their contact point are equal.

### BRIEF DESCRIPTION OF DRAWINGS

In the drawings, which are not necessarily drawn to scale, like numerals may describe similar components in different views.
FIG. 1 is a schematic diagram illustrating a testing apparatus body 10 in a system for testing cable bending fatigue according to an exemplary embodiment;
FIG. 2 is a side cross-sectional view of the testing apparatus body 10 shown in FIG. 1;
FIG. 3 is a top view of the testing apparatus body 10 shown in FIG. 1; and
FIG. 4 is a block diagram illustrating the system 400 for testing cable bending fatigue according to an exemplary embodiment.

### DETAILED DESCRIPTION

In the following description, numerous specific details are set forth. However, it is understood that embodiments of the invention may be practiced without these specific details. In other instances, well-known circuits, structures and techniques have not been shown in detail in order not to obscure the understanding of this description.

References in the specification to "one embodiment," "an embodiment," "an example embodiment," etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described.

Note that the terms "consists of", "consisting of", "has/have", "having", "includes", "including", "comprising", "containing" or any other variations thereof are intended to cover non-exclusive inclusions, such that process, method, article or apparatus that constitutes, has, includes or comprises a list of elements includes not only those elements, but may also include other elements not expressly listed or inherent to such process, method, article or apparatus. Elements beginning with "consists of one", "has one", "includes one" and "comprises one" are not excluded from constituting, having, including or comprising another identical element present in the process, method, article or apparatus that consists of, has, includes or comprises said elements without further constraints. Terms "a" and "an" are defined as one or more, unless expressly stated otherwise herein.

For the purposes of the present disclosure, the phrase "A and/or B" means (A), (B), or (A and B). For the purposes of the present disclosure, the phrase "A, B, and/or C" means (A), (B), (C), (A and B), (A and C), (B and C), or (A, B and C).

Terms "coupled," "connected," etc. are not limited to physical or mechanical connections, but may include electrical connections, whether direct or indirect.

When describing the embodiments of the present invention in detail, for the convenience of explanation, the cross-sectional views showing the device structure will not be partially enlarged according to the general scale, and the schematic diagrams are only examples, which should not limit the scope of protection of the present invention. In addition, the three-dimensional spatial dimensions of length, width and depth should be included in the actual production.

As mentioned above, structures where cables are tested by bending the cables in the manner of swing have problems of low operating frequency, poor structural stability and durability, and excessive noise during operation. The present disclosure is directed to a new test structure to this end.

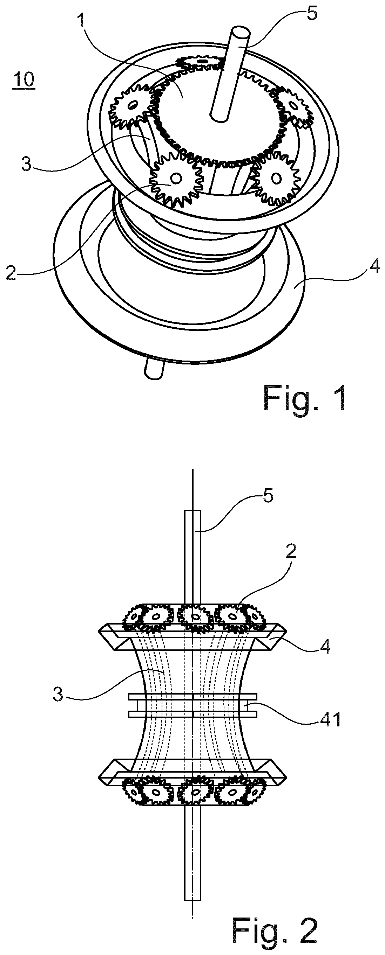

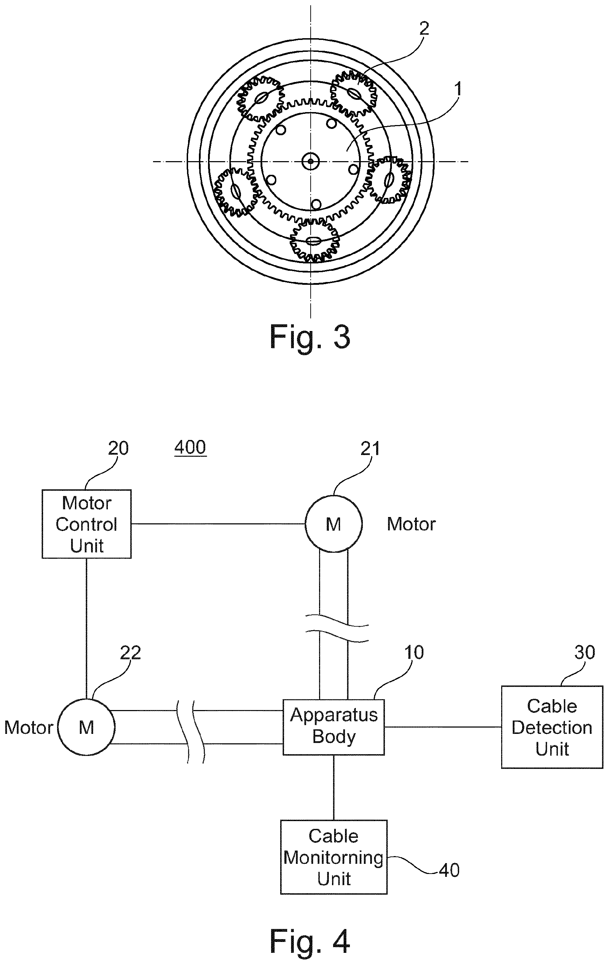

FIG. 1 is a schematic diagram illustrating a testing apparatus body 10 in a system for testing cable bending fatigue according to an exemplary embodiment. FIG. 2 is a side cross-sectional view of the testing apparatus body 10 shown in FIG. 1.FIG. 3 is a top view of the testing apparatus body 10 shown in FIG. 1.FIG. 4 is a block diagram illustrating the system 400 for testing cable bending fatigue according to an exemplary embodiment.

The example apparatus body 10 includes a body 4, a pair of primary gears 1 and at least a pair of secondary gears 2. In FIG. 1, for convenience of illustration, the primary gear 1 and the secondary gear 2 are shown with only one side.

The body 4 is hollow with openings at both ends, and the hollow portion is used for the cable 3 to be tested to pass through. Alternatively, the body 4 may allow a plurality of cables 3 to pass through its hollow portion so as to test the plurality of cables 3 at the same time.

A pair of primary gears 1 are provided at both ends of the body 4. These two primary gears 1 are connected by a transmission shaft 5.The transmission shaft 5 is connected to a first motor 21 (shown in FIG. 4) so that the primary gears 1 can be driven to rotate by the first motor 21 via the transmission shaft 5.

The primary gear 1 is arranged coaxially with the body 4 and is spaced apart from the end of the body 4 by a gap to accommodate the secondary gear 2 described below.

At least one pair (five pairs are shown in the figure) of secondary gears 2 are arranged to mesh with the primary gears 1. One pair of secondary gears 2 corresponds to one cable 3 to be tested.

Specifically, the gear centers of these two secondary gears 2 in the pair of secondary gears 2 are respectively coupled to both ends of the cable 3. As a result, the rotation of the secondary gears 2 will cause the cable 3 to rotate along its axis. Since the secondary gear 2 meshes with the primary gear 1, the rotational drive of the primary gears 1 by the first motor will eventually be converted into the rotation of the cable 3 around its axis.

In this embodiment, the spatial positions of the primary gears 1 and the secondary gears 2 remain unchanged, and only rotate.

The shape of the body 4 is designed such that the cable 3 is in a bended state when both ends of the cable 3 are fixed to the gear centers of the pair of secondary gears 2, as shown in FIG. 2.

Any shape can be used to achieve this. For example, the body 4 may have curved inner walls so that the cable 3 can be bent along the curved inner walls. In some embodiments, the inner wall may be bent in a direction toward the axis of the body4.The bending of the inner wall may be smooth, so that when the apparatus is in operation, all parts of the cable 3 are in a state of cyclic bending stress.

In some embodiments, the body 4 may have a constricted portion 41 with a reduced diameter, so that the secondary gears 2 are further away from the axis of the body 4 than the inner wall of the constricted portion 41. This can ensure that the cable 3 is in a bended state when it passes through the hollow portion of the body 4 and is fixed to the secondary gears 2.

However, it should be understood that the above shape is only an example, and the bending manner of the cable 3 is not limited to the direction toward the axis of the body 4 shown in FIGs. 1 and 2, a direction away from the axis of the body 4 is possible.

The bending fatigue test can be performed by simulating the bending state of the cable 3 in a 360-degree direction by applying rotation to the cable around its own axis via the secondary gears 2 in a state where the cable 3 is bent. Meanwhile, since the cable 3 is not subject to any movement in position except for rotation, it has good stability.

In this embodiment, five pairs of secondary gears 2 are shown, so that five cables 3 can be tested at the same time. It should be understood that the number of pairs of secondary gears 2 and the number of cables can be selected as required, and are not limited to those shown in the figures. However, too many cables 3 may cause friction between cables 3 during the test, affecting the fatigue test results, thus, the upper limit of the number of cables to be accommodated needs to be determined according to the inner diameter of the narrowest part of the body 4 and the wire diameter of the cables 3.

Alternatively, the respective pairs of secondary gears 2 are arranged at equal intervals in the axial direction of the primary gears 1 to ensure that the gap between the respective cables 3 fixed to the respective secondary gears 2 is even, and the gap will not become smaller.

Since the cable 3 remains in the bended state by contact with the inner wall of the body 4, the cable 3 will be subject to sliding friction with the body 4 when the cable 3 is rotated around its own axis by the rotation of the secondary gears 2.Such friction may cause damage to cable 3 thereby affecting the test results. To this end, in some embodiments, the body 4 may be configured to be rotatable. For example, another motor, i.e. a second motor 22 (shown in FIG. 4) may be utilized to drive the body 4 to rotate.

Specifically, the driving direction of the body 4 by the second motor 22 is opposite to that of the primary gear 1 by the first motor 21.In this way, the rotation direction transmitted to the cable 3 via the secondary gears 2 can be consistent with the rotation direction of the body 4, thereby reducing the sliding friction between the cable 3 and the inner wall of the body 4.

Further, the rotation speeds of the first motor 21 and the second motor 22 may be set so that the linear velocities of the cable 3 and the body 4 at their contact point are equal. As a result, at the portion where the cable 3 and the body 4 are in contact, they rotate at the same linear velocity and in the same direction, so that sliding friction between the cable 3 and the body 4 is eliminated. As a result, the bending fatigue performance of the cable 3 can be accurately measured without being affected by friction, so that fatigue damage caused by the pure bending state of the cable 3 can be studied.

The rotation speeds of the first motor 21 and the second motor 22 may be controlled by the motor control unit 20 shown in FIG. 4.The motor control unit 20 may control the first motor 21 and the second motor 22 according to a preset rotation speed ratio. In some embodiments, the motor control unit 20 may also control the first motor 21 and the second motor 22 based on signals from sensors (not shown) to improve control accuracy. The sensor here may be such as a linear velocity sensor provided on the inner wall of the body 4.

As shown in FIG. 4, the system 400 may further include a cable detection unit 30 and a device monitoring unit 40.The cable detection unit 30 is coupled to the cables 3 to detect whether the cables 3 are damaged. This can be determined by energizing the cable 3 and based on the output current and voltage. The device monitoring unit 40 is coupled to the apparatus body 10 to record the running time of the system 400, the rotation frequency and the number of rotations of the body 4, and the like.

The motor control unit 20, cable detection unit 30 and device monitoring unit 40 may be controllers, microprocessors, processors including more complex structures such as CPUs or GPUs, processors configured by software, or dedicated hardware or firmware.

In the case of using the system 400 for testing cable bending fatigue of the present disclosure to perform a bending fatigue test on one or more cables 3, each cable 3 is first passed through the hollow portion of the body 4, and both ends of each cable 3 are respectively fixed to the gear centers of the respective pairs of secondary gears 2.Upon mounted, the main body 4 causes the cable s3 in a bended state. Then, a first motor 21 can be used to drive the transmission shaft 5 to rotate, thereby driving the primary gears 1 to rotate. The primary gears1 in turn drives the cable 3 to rotate via the pair of secondary gears 2, thereby starting the fatigue test.

In the case where the second motor 22 described above is provided, the body 4 is simultaneously driven to rotate by the second motor 22, and the rotation speed and direction of the first motor 21 and the second motor 22 can be controlled by the motor control unit 2 described above so that the contact portion of the cable 3 and the body 4 is not subject to sliding friction.

The above-described embodiments, implementations, and aspects have been described in order to allow easy understanding of the present invention and do not limit the present invention. On the contrary, the invention is intended to cover various modifications and equivalent arrangements included within the scope of the appended claims, which scope is to be accorded the broadest interpretation so as to encompass all such modifications and equivalent structure as is permitted under the law.

## Claims

1. A system for testing cable bending fatigue, comprising:
a hollow body for at least one cable to pass through;
a pair of primary gears, respectively located at both ends of the body, said pair of primary gears are connected by a transmission shaft and can be driven to rotate by a first motor via the transmission shaft; and
at least one pair of secondary gears, each pair of the at least one pair of secondary gears is respectively meshed with one pair of primary gears, and can be driven to rotate by the meshed primary gears,
wherein, both ends of the cable are respectively fixed to gear centers of a pair of secondary gears of the at least one pair of secondary gears, and
wherein the body causes the cable in a bended state when both ends of the cable are fixed to the gear centers of the pair of secondary gears.

2. The system for testing cable bending fatigue of claim 1, wherein Inner walls of the main body portion are curved surface.

3. The system for testing cable bending fatigue of claim 1, wherein the body has a constricted portion with a reduced diameter.

4. The system for testing cable bending fatigue of anyone of claims 1-3, wherein the body can be driven to rotate by a second motor.

5. The system for testing cable bending fatigue of claim 4, further comprising:
a motor control unit coupled to the first motor and the second motor and configured to cause the first motor and the second motor to drive the primary gears and the body in opposite directions, and wherein rotational speeds of the first motor and the second motor are controlled so that linear velocities of the body and the cable at their contact point are equal.

6. The system for testing cable bending fatigue of anyone of claims 1-3, further comprising:
a cable detection unit coupled to the cable and configured to energize the cable to detect whether the cable is damaged.

7. A method for testing cable bending fatigue, including:
passing at least one cable through a hollow part of the body of the system for testing cable bending fatigue of claim 1, with both ends of each cable fixed to gear centers of both gears of corresponding pair of secondary gears; and
driving a pair of primary gears meshed with the pair of secondary gears by a first motor to rotate the cable on its own axis.

8. The method for testing cable bending fatigue of claim 7, further including:
driving the body by a second motor.

9. The method for testing cable bending fatigue of claim 8,
wherein rotation speed and direction of the first motor and the second motor are selected so that linear velocities of the body and the cable at their contact points are equal.
